# EUROPÄISCHE PATENTSCHRIFT

(11) **EP 0 686 476 B1**
(45) Veröffentlichungstag und Bekanntmachung des Hinweises auf die Patenterteilung: **28.07.1999**
(21) Anmeldenummer: 95107729.6
(22) Anmeldetag: 19.05.1995
(51) Int. Cl.: B29C 51/16, B29C 51/32

(54) **Verfahren und Vorrichtung zum Herstellen eines kaschierten Formteiles**
Method and apparatus for making a lined product
Procédé et appareil pour la fabrication d'un objet revêtu

(30) Priorität: 07.06.1994 DE 4419908
(43) Veröffentlichungstag der Anmeldung: 13.12.1995
(73) Patentinhaber: LIGNOTOCK GmbH, D-36205 Sontra (DE)
(72) Erfinder: Nicolay, Albert, Dr., D-37276 Meinhard-Neuerode (DE)
(74) Vertreter: Pfenning, Meinig & Partner

(56) Entgegenhaltungen:
- EP-A- 0 127 035
- EP-A- 0 210 583
- WO-A-89/03751
- DE-A- 2 010 260
- GB-A- 2 195 940
- US-A- 3 657 044
- US-A- 4 243 456
- PATENT ABSTRACTS OF JAPAN vol. 14 no. 536 (M-1052) ,27.November 1990 & JP-A-02 227236 (NISSAN MOTOR CO LTD) 10.September 1990,
- DATABASE WPI Week 8750 Derwent Publications Ltd., London, GB; AN 87-353172 & JP-A-62 257 827 (MITSUBISHI MONSANTO KK) , 10.November 1987

## Beschreibung

Die Erfindung betrifft ein Verfahren der im Gattungsteil des Anspruches 1 angegebenen Art und ein Werkzeug zu seiner Durchführung.

Das Ausformen von Mischungen aus Polypropylen und Holzpartikeln ist unter der Bezeichnung HMPP (Holzmehlpolypropylen) in der Fachwelt bekannt. Dabei wird die Werkstoffmischung in Plattenform durch Extrudieren (gegebenenfalls zusätzliches Kalandrieren) hergestellt, wobei die Wanddicke der Platten der Dicke des späteren Formteiles entspricht. Diese HMPP-Platten werden - vorzugsweise durch Strahlenbeheizung - auf die Erweichungstemperatur des Polypropylens erwärmt, und danach mit an sich bekannten Formgebungsverfahren, wie Vakuumtiefziehen, Verpressen in einem aus Patrize und Matrize bestehenden Werkzeug od.dgl., zum jeweils gewünschten Formteil ausgeformt. Die Werkzeugtemperaturen liegen dabei unter der Erweichungstemperatur des Polypropylens, so daß der Werkstoff während des Ausformens abkühlt und das Formteil dem Werkzeug formstabil entnommen werden kann.

In der DE-OS 28 45 117 wird ein Verfahren zur Herstellung von zu Formteilen verpreßbarem Plattenmaterial aus zellstoffhaltigem Material und mindestens einem thermoplastischen Bindemittel beschrieben, wobei das zellstoffhaltige Material und die thermoplastischen Bindemittel gemischt und die Mischung in erwärmtem Zustand zu Plattenmaterial geformt wird. Das Verfahren kennzeichnet sich dadurch, daß das zellstoffhaltige Material zu Faserstoff zerfasert und mit den thermoplastischen Bindemitteln gemischt, aus der Mischung ein Vlies gebildet und das Vlies durch Einwirkung von Wärme und Druck zu Plattenmaterial verdichtet wird. Dabei wird angestrebt, ein Verfahren anzugeben, das in einfacher und kostengünstiger Weise die Herstellung von Plattenmaterial gestattet, das sich durch gute Homogenität und mechanische Eigenschaften auszeichnet und sich in einfacher Weise zu Formteilen hoher Qualität fertigpressen läßt.

Als thermoplastische Bindemittel können Polyäthylene, Polypropylene, Polyamide od.dgl. eingesetzt werden, und zwar üblicherweise mit einem Gewichtsanteil von mehr als 40 %, vorzugsweise 50 bis 60 %. Der große Anteil an thermoplastischen Bindemitteln ist aus preislichen und technischen Gründen (Erweichungstemperatur) beim heutigen Stand der Technik nur mit der Verwendung von Polypropylen sinnvoll. Ein nachfolgendes Kaschieren der Formteile in einem Arbeitsgang mit der Ausformung ist anzustreben. Hierbei läßt sich aber die Kaschierung nicht "umbugen", d.h. um die Formteilkante herumlegen, was den Anwendungsbereich der Formteile stark begrenzt und damit natürlich auch den Anwendungsbereich des vorgeschlagenen Verfahrens. In der DE-OS 28 45 117 wird zu dieser Problematik ausgeführt: "Eine weitere vorteilhafte Möglichkeit besteht darin, eine Oberflächenschicht, beispielsweise eine Folie, vorzugsweise eine textile Schicht (Vlies, Gewebe, Gewirk) vor dem Fressen mit dem Formteil zu verbinden. Aufgrund des Anteiles thermoplastischer Kunststoffe im Formteil wird die Oberflächenschicht mit diesem in einem einzigen Arbeitsgang beim pressen verschweißt. Es können somit derartige Schichten unmittelbar auf die Formteile aufkaschiert oder beispielsweise ein Teppich aufgepreßt werden. Da eine Beheizung des Preßwerkzeuges nicht notwendig ist und häufig sogar mit kalten Preßwerkzeugen gearbeitet wird, kann die Oberflächenschicht beliebig gewählt werden und sogar aus einer thermoplastischen Folie bestehen, die in einem heißen Preßwerkzeug alsbald schmelzen würde."

Es wurde aber bisher das Umbugen beim One-shot-Verfahren für schwer durchführbar gehalten, weil der Beschnitt des Formteiles beim oder nach dem Pressen und Kaschieren, da ein Überstand der Kaschierung zum Umbugen benötigt wird, sozusagen "auf der Kaschierung" erfolgen müßte, was bei den fertigungsüblichen Dickentoleranzen der Trägerteile nicht für machbar erachtet wurde.

Ein solches Verfahren ist in JP-A-02 227 236 beschrieben. Zunächst wird hier im One-Shot-Verfahren geformt und kaschiert, danach wird dann in einem gesonderten Werkzeug das Randbeschnitt vorgenommen und mit Hilfe einer keilförmigen umlaufenden Nase gleichzeitig das Trägerteil so gekerbt, daß dieser Bereich, der an sich schon kaschiert ist, nach der Entnahme aus dem Werkzeug durch mehrere Biegevorgänge und einem Schneidvorgang entfernt werden kann, wobei er zusätzlich von der Kaschierung abgezogen werden muß. Danach wird der so freigelegte Bereich der Kaschierung umgebugt.

Abgesehen davon, daß dieses Verfahren einen hohen Werkzeugaufwand erfordert, bleibt der schon erörterte Nachteil des Schneidens gegen die Kaschierung, was die Auswahl möglicher Kaschierungswerkstoffe stark einschränkt. Es bleibt außerdem der Nachteil, daß die äußeren Bereiche des Trägerteiles nach der Kerbung "von Hand" entfernt werden müssen, da dieser Arbeitsgang, wenn überhaupt, nur mit großem Aufwand automatisierbar wäre.
Hiervon ausgehend, liegt der vorliegenden Erfindung die Aufgabe zugrunde, ein Verfahren der eingangs beschriebenen Art anzugeben, mit dem im One-Shot-Verfahren auch umgebugte kaschierte Formteile vereinfacht herstellbar sind, und ein Multifunktionswerkzeug zur Durchführung des Verfahrens vorzugeben.

Bezüglich des Verfahrens wird die Aufgabe erfindungsgemäß durch die im kennzeichnenden Teil des Anspruches 1 angegebenen Merkmale gelöst. Diesbezügliche Unteransprüche bilden das Verfahren vorteilhaft weiter. Bezüglich des Multifunktionswerkzeuges gibt der Anspruch 9 die Lösung der Erfindungsaufgabe an.

Dadurch, daß der Umbug-Überstand des Kaschierwerkstoffes nach dem einbringen im Multifunktionswerkzeug festgeklemmt und derart fixiert wird, daß er zur Flächenlage des Trägerteilrandes abgewinkelt wird, und zwar umlaufend längs der Trägerteilkontur, bleibt dieser Bereich, in dem das Trägerteil bei seiner Fertigung beschnitten werden muß, zugänglich, und der Überstand der Kaschierung bleibt geschützt. Die Verwendung eines Multifunktionswerkzeuges, in dem der Kaschierstoff und das matten- oder plattenförmige Halbzeug geformt kaschiert wird und in dem alle Beschnittvorgänge ohne Transfer ortsfest durchgeführt werden, ergibt den Vorteil einer einwandfreien Justierung von Kaschierung und Trägerteil bei definiertem Umbugmaterial, wodurch der nachfolgende Umbugvorgang mechanisiert erfolgen kann.

Die Zuführung des Kaschiermaterials kann dabei als Rohzuschnitt erfolgen, aber auch als von einer Rolle abgezogene Bahn, dann beispielsweise mit Hilfe von Kluppenketten.

Die Zufuhr des erwärmten matten- oder plattenförmigen Halbzeuges für das zu formende Trägerteil kann in der gleichen Weise erfolgen, und zwar in dem darauffolgenden Verfahrensschritt, in dem auch das Halbzeug geformt und mit dem Kaschierungwerkstoff verbunden wird. Der Überstand des Trägerteilwerkstoffes wird dabei umlaufend abgeschert, z.B. durch eine an sich übliche Schneidkante (Überfahrkonto). Ein derartiges Trennverfahren ist zum einen unabhängig von einer Dickentoleranz des geformten Trägerteiles, zum anderen stützen sich die Scherkräfte voll auf dem Unterwerkzeug ab und belasten den Umbugüberstand der Kaschierung nicht. Da der Randbereich des Trägerteiles bei dem erfindungsgemäßen Verfahren direkt zugänglich ist, ergeben sich bei der Ausbildung der abscherenden Schneidkante keine konstruktiven Schwierigkeiten.

Der dritte Verfahrensschritt beinhaltet den Fertigbeschnitt der Kaschierung auf Umbugmaß, und zwar mit einem umlaufenden, in das Multifunktionswerkzeug integrierten und gesondert betätigbaren Beschnittmesser. Die Vorteile der Zusammenfassung aller Verfahrensschritte bis auf den eigentlichen "Umbug" in einem einzigen Multifunktionswerkzeug bezüglich des Werkzeug-Gesamtaufwandes und der Fertigungspräzision wurden bereits dargelegt.

Im vierten Verfahrensschritt, der die Formteilfertigung abschließt, wird das Formteil, nachdem es abgekühlt und somit formstabil geworden ist, dem Multifunktionswerkzeug entnommen, in ein an sich übliches Umbugwerkzeug überführt, in dem der Überstand der Kaschierung um die Formteilkante geklebt (umgebugt) wird.

Das erfindungsgemäße Verfahren erlaubt es also, in vorteilhafter Weise kaschierte Formteile im One-Shot-Verfahren zu fertigen und in bewährter Art "umzubugen", und zwar bei nur geringem Mehraufwand für das Multifunktionswerkzeug.

Ein separates Kaschieren unter Verwendung umweltbelastender Lösungsmittel kann entfallen.

Das erfindungsgemäße Verfahren kann dadurch vorteilhaft weitergebildet werden, daß das Formteil gleichzeitig mit dem Umbugen im Umbugwerkzeug mit gestanzten Durchbrüchen versehen wird, beispielsweise für Türgriffe, Aschenbecher oder ähnliche zu applizierende Bauteile. Transfer und Fertigungszeit können so eingespart werden.

Bei komplizierter Formgebung und/oder empfindlichen Kaschierwerkstoffen können diese bereichsweise und/oder oder näherungsweise vorgeformt verwendet werden. Der Anwendungsbereich des erfindungsgemäßen Verfahrens läßt sich so beträchtlich erweitern. Tiefziehfähige Kaschierwerkstoffe können natürlich auch direkt im Multifunktionswerkzeug vorgeformt werden. Die umlaufende Fixierung ermöglicht nach einer Erwärmung des Kaschierwerkstoffes in an sich bekannter Weise ein Vakuumtiefziehen direkt im Multifunktionswerkzeug, wenn dessen Gravur evakuierbar ausgebildet ist, was keine Schwierigkeiten bereitet.

Auch rückseitiges Anbringen von Zusatzbauelementen, wie Clipse und Retainer, ist zusammen mit dem Ausformen des Trägerteiles möglich. Die adhäsive Befestigung dieser Bauelemente ist entweder durch trägerteileigene Bindemittel oder auch durch Verwendung von Hafthilfen - beispielsweise Schmelzkleber - möglich.

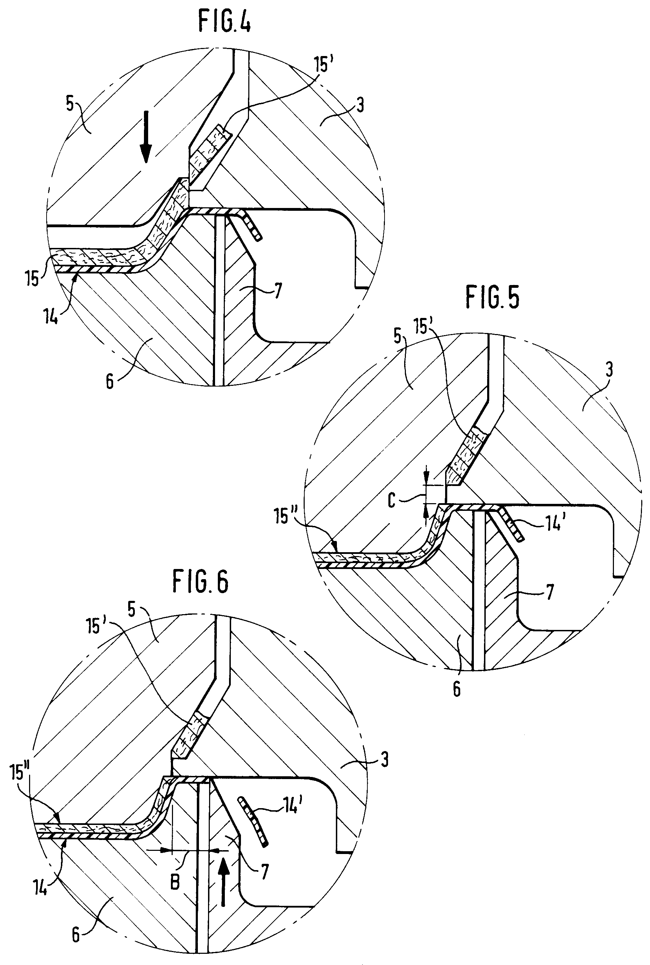

Ein zweckmäßiges Multifunktionswerkzeug zur Durchführend des Verfahrens nach Anspruch 1, einsetzbar in eine Vertikalpresse, besteht aus einer Grundmontageplatte 1, auf der mit Hilfe der Distanzsäulen 4 der Klemmring 3 ortsfest angeblockt ist, dem Unterwerkzeug 6, das mit Hilfe der Hubvorrichtung 11 gegen den Klemmring 3 bewegbar ist, wobei das Unterwerkzeug 6 ein Beschnittmesser enthält, das mittels der Hubvorrichtung gesondert betätigbar ist. Weiterhin besteht es aus der Kopfmontageplatte 2 mit dem Oberwerkzeug 5, den Hubbegrenzungsanschlägen 12 und Zentrierbolzen 10, wobei der Eintauchbereich (C in Fig. 5) des Oberwerkzeuges 6 in den Klemmring 3 als Schneidkante ausgebildet ist.

Ein derartiger Aufbau ist übersichtlich und wartungsfreundlich. Auch das Vakuumtiefziehen des Kaschierwerkstoffes kann in dieses Werkzeug ebenso problemlos integriert werden wie Transportelemente, mit denen die Kaschierungs- und/oder Trägerteil-Werkstoffe bahnförmig zugeführt werden können.

Die Erfindung sei nunmehr anhand der Figuren 1 bis 6 näher erläutert und beschrieben. Es zeigen:
- Fig. 1 bis 6: den schrittweisen Funktionsablauf des Multifunktionswerkzeuges in einer Schnittdarstellung durch den Randbereich des Werkzeuges,
- Fig. 4 bis 6: anhand eines vergrößerten Teilausschnittes der Figuren 1 bis 3 die Abscher- und Beschnittsabläufe bei Trägerteil und Kaschierung.

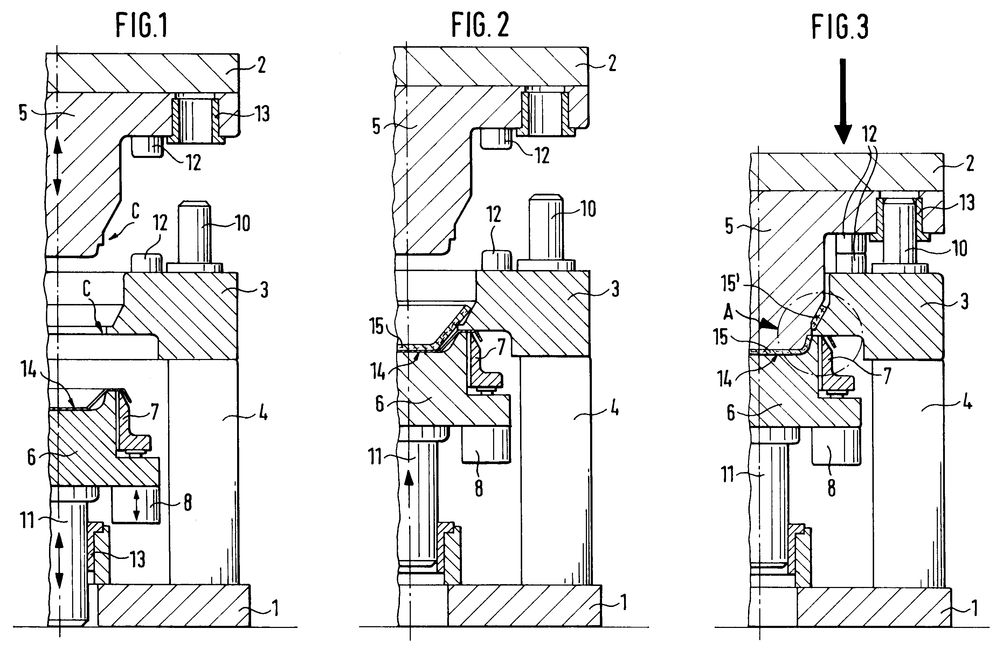

In Fig. 1 ist die Montagegrundplatte mit 1, die Montagekopfplatte mit 2 bezeichnet. Mit Hilfe dieser Montageplatten, zwischen denen alle Bauelemente des Multifunktionswerkzeuges angeordnet sind, wird das Werkzeug in eine einfach wirkende Vertikalpresse eingespannt. Ortsfest mittels Distanzsäulen 4 angeblockt, befindet sich der Spannring 3, der an seiner Oberseite die Zentrierbolzen 10 und die Hubbegrenzungsanschläge 12 trägt und der im Bereich "C" als Schneidkante ausgebildet ist. Das Unterwerkzeug 6, das die Sichtseite des Formteiles vorgibt, kann mit Hilfe der Hubvorrichtung 11 auf und ab bewegt werden. Das Beschnittmesser 7, das durch die Hubvorrichtung 8 gesondert auf und ab bewegbar ist, ist integraler Bestandteil des Unterwerkzeuges 6, es folgt in seiner Ruhestellung (in den Figuren 1 bis 3 so dargestellt) dessen Hubbewegungen.

Das Oberwerkzeug 5 ist fest mit der Montageoberplatte 2 verbunden. Sein Bereich "C" wirkt beim Pressenhub zusammen mit dem entsprechenden Bereich des Spannringes 3 als Schneidkante für den Beschnitt des Trägerteilwerkstoffes 15. Die Pfeile in Fig. 1 symbolisieren diese Bewegungsmöglichkeiten der entsprechenden Bauelemente. In Fig. 1 ist der Werkzeugzustand nach dem Einlegen des Kaschierwerkstoffes 14 dargestellt.

In Fig. 2 ist mit gleicher Benennung der Bauelemente dargestellt, wie durch die Aufwärtsbewegung des Unterwerkzeuges 6 in Pfeilrichtung der Kaschierwerkstoff 14 zwischen Spannring 3 und Unterwerkzeug 6 eingeklemmt und fixiert und der erwärmte mattenförmige Werkstoff 15 für das Trägerteil eingelegt ist.

In Fig. 3 ist das Oberwerkzeug 5, durch den Pressenhub in Pfeilrichtung in seine durch die Anschläge 12 definierte Endstellung bewegt, dargestellt. Das Trägerteil ist ausgeformt und an seiner Sichtseite kaschiert. Der Überstand des Trägerteilwerkstoffes 15' ist durch Scherung abgetrennt, der Umbugbeschnitt des Kaschierwerkstoffes 14 ist noch nicht ausgeführt.

Figuren 4 bis 6 sind vergrößerte Auschitte der Fig. 3, in denen das Abscheren des Überstandes des Trägerteilwerkstoffes 15 und das Beschneiden des Kaschierwerkstoffes 14 dargestellt sind. Die Bauelemente sind dabei mit gleichen Ziffern bezeichnet wie in den Figuren 1 bis 3, die jeweiligen Bewegungsrichtungen durch Pfeile gekennzeichnet.

Fig. 4 erläutert den Beginn des Schervorganges im Trägerteilwerkstoff 15, der noch nicht zum Trägerteil ausgeformt ist. Das Zusammenwirken der Schneidkanten ist ersichtlich, ebenso auch, daß der Umbugbereich des Kaschierwerkstoffes 14 nich tmechanisch durch den Schervorgang belastet wird.

In der Darstellung der Fig. 5 ist dieser Schervorgang abgeschlossen, und der Überstand 15' des Trägerteilwerkstoffes 15 ist abgetrennt. Das Halbzeug 15 ist zum fertigen Trägerteil 15'' ausgeformt (und endverdichtet, da diesen Darstellungen ein verdichtungsfähiges Halbzeug zugrunde gelegt wurde).

Fig. 6 schließlich zeigt den Endbeschnitt des Kaschierwerkstoffes 15, durch den der Umbugbereich "B" definiert vorgegeben wird, durch die in Pfeilrichtung erfolgende Aufwärtsbewegung des Beschnittmessers 7. Der nicht benötigte Beschnittabfall 14' wird dabei abgetrennt.

Die Figuren 1 bis 6 erläutern eine beispielsweise Ausführung eines erfindungsgemäßen Multifunktionswerkzeuges, Abwandlungen, beispielsweise das Anbringen von auswechselbaren Schneidkanten und Schneidleisten an den Bauelementen 3 und 5 ist gegebenenfalls möglich, ebenso andere Geometrien, mit denen das erfindungsgemäße Verfahren realisiert werden kann.

## Patentansprüche

1. Verfahren zum Herstellen eines kaschierten Formteiles, bestehend aus einem formstabilen Trägerteil (15'') und einer mit diesem verbundenen sichtseitigen Kaschierung (14) bei dem ein erwärmtes matten- oder plattenförmiges Halbzeug (15) aus bindemittelhaltigen Faserwerkstoffen in einem Preßwerkzeug, dessen Temperatur niedriger ist als die des erwärmten Halbzeugs (15), und bei dem durch Entfernen von Randbereichen (15') des Halbzeuges (15) und Beschneiden der Kaschierung (14) ein umbugfähiger Überstand der Kaschierung (14) erzeugt und randumgreifend umgelegt wird,
**dadurch gekennzeichnet,**
daß die Verfahrensschritte
Ausformen des Trägerteiles (15''), Kaschieren, Entfernen des Trägerteil-Randmaterials (15') und Beschneiden der Kaschierung (14) in einem einzigen Multifunktionswerkzeug derart durchgeführt werden, daß in einem ersten Schritt der Kaschierwerkstoff (14) mit einem Überstand zur Trägerteilkontur in das Multifunktionswerkzeug eingebracht und umlaufend längs der Trägerteilkontur derart festgeklemmt und fixiert wird, daß der Überstand der Kaschierung (14) zu der Flächenlage des Trägerteilrandes abgewinkelt ist, daß danach der Zuschnitt des Halbzeuges (15) für das Trägerteil (15'') in das Multifunktionswerkzeug eingebracht, und in einem Hub des Preßwerkzeugs geformt und kaschiert wird, wobei durch Zusammenwirken eines Werkzeugoberteils (5) mit einer Schneidkante eines Spannrahmens (3) gleichzeitig der Randbereich (15') des Trägerteiles (15'') abgetrennt wird bevor der Überstand (14') der Kaschierung (14) durch ein gesondert zu betätigendes Schnittmesser (7) entfernt wird, und das kaschierte Formteil (15'') mit einem definierten Umbugüberstand nach der Abkühlung dem Multifunktionswerkzeug entnommen und einem an sich bekannten Umbugwerkzeug zugeführt wird.

2. Verfahren nach Anspruch 1,
**dadurch gekennzeichnet,**
daß zusammen mit dem Umbugen das Formteil (15'', 14) mit gestanzten Durchbrüchen versehen wird.

3. Verfahren nach Anspruch 1,
**dadurch gekennzeichnet,**
daß eine bereichsweise und/oder näherungsweise vorgeformte Kaschierung (14) verwendet wird.

4. Verfahren nach Anspruch 1,
**dadurch gekennzeichnet,**
daß die Kaschierung (14) nach ihrer Fixierung im Multifunktionswerkzeug vorgeformt wird.

5. Verfahren nach Anspruch 1,
**dadurch gekennzeichnet,**
daß mit der Ausformung des Trägerteiles (15'') und dessen Kaschierung (14) im gleichen Pressenhub an dem Trägerteil (15'') rückseitig Bauelemente angebracht und adhäsiv befestigt werden.

6. Verfahren nach Anspruch 1,
**dadurch gekennzeichnet,**
daß der Überstand der Kaschierung (14) zur Flächenlage des Trägerteilrandes näherungsweise in Richtung der Flächennormalen abgewinkelt wird.

7. Verfahren nach Anspruch 1,
**dadurch gekennzeichnet,**
daß das erwärmte matten oder plattenförmige Halbzeug (15) für das Trägerteil (15'') bahnförmig in das Multifunktionswerkzeug eingebracht wird.

8. Verfahren nach Anspruch 1,
**dadurch gekennzeichnet,**
daß das erwärmte matten- oder plattenförmige Halbzeug (15) für das Trägerteil (15'' als Zuschnitt in das Multifunktionswerkzeug eingebracht wird.

9. Multifunktionswerkzeug zur Durchführung des Verfahrens nach Anspruch 1, das in eine Vertikalpresse einsetzbar ist, wobei
auf einer Grundmontageplatte (1) mit Hilfe von Distanzsäulen 84) der Spannrahmen (3) ortsfest angeblockt ist, wobei ein Unterwerkzeug (6) mit Hilfe einer Hubvorrichtung (11) gegen den Spannrahmen (3) bewegbar ist, dieses Unterwerkzeug (6) ein Beschnittmesser (7) enthält, das mittels einer eigenen Hubvorrichtung (8) gesondert gegenüber dem Unterwerkzeug (6) bewegbar ist, und wobei eine obere Montageplatte (2) zusammen mit einem angeflanschten Oberwerkzeug (5), Hubbegrenzungsanschlägen (12) und Zentrierhülsen (13) durch die Vertikalpresse bewegbar ist und in der unteren Hubposition die Kontur des kaschierten Formteiles (15'', 14) vorgibt, wobei der Eintauchbereich des Oberwerkzeuges (5) in den Spannvolumen (3) als Schneidkante ausgebildet ist.

## Claims

1. Process for manufacturing a lined shape comprising a shape-retaining support (15'') and a thereto joined lining (14) at the visible side, in which a heated mat- or plate-shaped semi-product (15) of fibre materials which include bonding agents is produced in a press tool the temperature of which is lower than that of the heated semi-product (15), and in which a protrusion of the lining (14) which is suitable for beading is produced by removing edge areas (15') of the semi-product (15) by cutting the lining (14) and wrapping it around the edge, **characterised in that** the procedural steps of shaping the support (15''), lining, removing the support edge material (15') and trimming of the lining (14) are performed in one single multi-function tool in such a manner that in a first step the lining material (14) with a protrusion towards the support contour is inserted into the multi-function tool and peripherally clamped and fixed along the support contour in such a manner that the protrusion of the lining (14) is angled relative to the surface position of the support edge, and thereafter the shape of the semi-product (15) for the support (15'') is inserted into the multi-function tool and shaped and lined by way of one stroke of the press tool, and by co-acting of a top part of the tool (5) with a cutting edge of a clamping frame (3) the edge area (15') of the support (15'') is at the same time separated before the protrusion (14') of the lining (14) is removed by a separately operated cutting knife (7), and after cooling down the lined shape (15'') with a defined beading protrusion is removed from the multi-function tool and delivered to a conventional beading tool.

2. Process according to Claim 1, **characterised in that** during the beading process the shape (15'', 14) is provided with punched passages.

3. Process according to Claim 1, **characterised in that** a sectionally and/or approximately preshaped lining (14) is used.

4. Process according to Claim 1, **characterised in that** the lining (14) is preshaped after having been fixed in the multi-function tool.

5. Process according to Claim 1, **characterised in that** whilst shaping the support (15'') and its lining (14), structural elements are placed and adhesively attached to the rear of the support (15'') in the same pressure stroke.

6. Process according to Claim 1, **characterised in that** the protrusion of the lining (14) relative to the surface position of the support edge is angled approximately in the direction of the surface normal.

7. Process according to Claim 1, **characterised in that** the heated mat- or plateshaped semi-product (15) for the support (15'') is in its length inserted into the multi-function tool.

8. Process according to Claim 1, **characterised in that** the heated mat- or plateshaped semi-product (15) for the support (15'') is inserted into the multi-function tool as a shape.

9. Multi-function tool for carrying out the process according to Claim 1, which is insertible into a vertical press, and the clamping frame (3) is spatially fixed by being blocked onto a base assembly plate (1) with the aid of spacer columns (4), and a bottom tool (6) is movable with the aid of a lifting device (11) against the clamping frame (3), and this bottom tool (6) includes a trimming knife (7) which is separately movable relative to the bottom tool (6) by means of its own lifting device (8), and an upper assembly plate (2) is movable by means of the vertical press together with a flanged top tool (5), lift-limiting stops (12) and centring sleeves (13) and establishes in the lower lift position the contour of the lined shape (15'', 14), and the immersion area of the top tool (5) in the clamping volumes (3) is designed as a cutting edge.

## Revendications

1. Procédé pour fabriquer une pièce moulée pourvue d'un revêtement, constituée par une partie de support de forme stable (15'') et un revêtement (14) situé sur le côté visible et relié à cette partie de support, selon lequel on place un produit demi-fini (15) chauffé en forme de mat ou de plaque et réalisé en des matériaux fibreux contenant un liant, dans un outil de pressage, dont la température est inférieure à celle du produit demi-fini chauffé (15), et selon lequel en éliminant des parties (15') du bord du produit demi-fini (15) et en découpant le revêtement (14), on forme une partie en saillie du revêtement (14), que l'on peut replier, et on la rabat de manière qu'elle enserre le bord,
caractérisé en ce
que les étapes opératoires comprenant le démoulage de la partie de support (15''), l'application d'un revêtement, l'élimination du matériau (15') du bord de la partie de support et le découpage du revêtement (14) sont exécutées dans un seul outil multifonctions de telle sorte que lors d'une première étape, le matériau de revêtement (14) comportant une partie en saillie par rapport au contour de la partie de support est inséré dans l'outil multifonctions et est serré fermement et est fixé circonférentiellement le long du contour de la partie de support de telle sorte que la partie en saillie du revêtement (14) est repliée en direction de la position de la surface du bord de la partie de support, qu'ensuite le flan du produit semi-fini (15) pour la partie de support (15'') est introduit dans l'outil multifonctions et est mis en forme et pourvu d'un revêtement lors d'une course de l'outil de pressage, auquel cas sous l'effet de la coopération d'une partie supérieure (5) de l'outil avec un bord de coupe d'un cadre de serrage (3), la partie de bord (15') de la partie de support (15'') est simultanément retirée par sectionnement avant que la partie en saillie (14') du revêtement (14) soit éliminée par un couteau de découpage (7) devant être actionné séparément, et la pièce moulée (15'') pourvue d'un revêtement et comportant une partie en saillie définie devant être repliée est retirée de l'outil multifonctions après le refroidissement et est envoyée à un outil de repliage connu en soi.

2. Procédé selon la revendication 1, caractérisé en ce que conjointement avec le repliage, la pièce moulée (15'', 14) est pourvue de perçages formés par poinçonnage.

3. Procédé selon la revendication 1, caractérisé en ce qu'on utilise un revêtement (14) préformé par endroits et/ou préformé de façon approximative.

4. Procédé selon la revendication 1, caractérisé en ce que le revêtement (14) est préformé après sa fixation dans l'outil multifonctions.

5. Procédé selon la revendication 1, caractérisé en ce que des composants sont installés sur le côté arrière de la partie de support (15'') lors de la même course de déplacement de la presse, lors du moulage de la partie de support (15'') et de son revêtement (14) et y sont fixés par adhérence.

6. Procédé selon la revendication 1, caractérisé en ce que la partie du revêtement (14) en saillie par rapport à la position de la surface du bord de la partie de support est repliée approximativement en direction de la normale à la surface.

7. Procédé selon la revendication 1, caractérisé en ce qu'on introduit le produit semi-fini (15) chauffé en forme de mat ou de plaque pour la partie de support (15'') sous la forme d'une bande dans l'outil multifonctions.

8. Procédé selon la revendication 1, caractérisé en ce qu'on introduit le produit semi-fini chauffé en forme de mat ou de plaque (15) pour la partie de support (15'') sous la forme d'un flan dans l'outil multifonctions.

9. Outil multifonctions pour la mise en oeuvre du procédé selon la revendication 1, qui peut être utilisé dans une presse verticale, dans lequel le cadre de serrage (3) est bloqué en position fixe sur une plaque de montage de base (1) à l'aide de colonnes d'entretoisement (4), un outil inférieur (6) peut être amené contre le cadre de serrage (3) à l'aide d'un dispositif de levage (11), cet outil inférieur (6) contient un couteau de découpage (7) qui est déplaçable séparément au moyen d'un dispositif propre de levage (8) par rapport à l'outil inférieur (6), et dans lequel une plaque supérieure de montage (2) peut être déplacée, par la presse verticale, conjointement avec un outil supérieur (5) raccordé par bride, des butées de limitation de levage (12) et des douilles de centrage (13), et prédétermine dans la position de levage inférieure, le contour de la pièce moulée (15'', 14) pourvue d'un revêtement, et dans lequel la zone d'insertion de l'outil supérieur (5) dans le cadre de serrage (3) est agencée sous la forme d'une arête de coupe.
